# EUROPÄISCHE PATENTSCHRIFT

(11) **EP 0 469 297 B1**
(45) Veröffentlichungstag und Bekanntmachung des Hinweises auf die Patenterteilung: **01.02.1995**
(21) Anmeldenummer: 91110612.8
(22) Anmeldetag: 26.06.1991
(51) Int. Cl.: C03B 23/045

(54) **Drehbares Haltefutter für Glasrohre**
Rotatable chuck for glass tubes
Mandrin rotatif pour des tubes en verre

(30) Priorität: 31.07.1990 DE 4024498
(43) Veröffentlichungstag der Anmeldung: 05.02.1992
(73) Patentinhaber: Schott Glaswerke, 55122 Mainz (DE); Carl-Zeiss-Stiftung trading as SCHOTT GLASWERKE, 55122 Mainz (DE)
(72) Erfinder: Männl, Reinhard, W-8596 Mitterteich (DE); Wolfrum, Alfons, W-8593 Tirschenreuth (DE); Neumeier, Franz, W-8594 Arzberg (DE)
(74) Vertreter: Fuchs Mehler Weiss

(56) Entgegenhaltungen:
- WO-A-87/06222
- DE-C- 585 899
- PATENT ABSTRACTS OF JAPAN, unexamined applications, C Field, Band 9, Nr. 287,14. November 1985 THE PATENT OFFICE JAPANESE GOVERNMENT Seite 64 C 314

## Beschreibung

Die Erfindung betrifft ein drehbares Haltefutter für Glasrohre, insbesondere für Maschinen zur Herstellung von Fläschchen oder Ampullen aus Glasrohren, nach dem Oberbegriff des Anspruchs 1.

Eine Fläschchenmaschine, in der aus Glasrohren durch Einrollen Fläschchen bzw. Ampullen hergestellt werden, weist gewöhnlich auf einem Drehkranz geführte, in regelmäßigen Teilungsabständen angeordnete drehbare Haltefutter auf, in denen jeweils ein Glasrohr nacheinander verschiedenen Bearbeitungsstationen zugeführt wird. Die Haltefutter müssen drehbar sein, damit ein rotationssymmetrisches Formen des herzustellenden Fläschchens möglich ist. Die durchgeführten Formungsschritte sind hierbei normalerweise das Einrollen eines Mündungsbereiches und das Glätten eines Bodens am herzustellenden Fläschchen. Da das Formen des Glasrohres nur bei erhöhten Temperaturen (550-1000°C) möglich ist, müssen die verwendeten Haltefutter auch bei verhältnismäßig hohen Temperaturen noch zuverlässig arbeiten, andererseits muß mit dem Haltefutter ein gefühlvolles Zugreifen und Festhalten möglich sein, damit das in ihm gehaltene Glasrohr nicht zerstört wird.

Ein solches Haltefutter ist aus der WO-A-87/06222 bekannt. Das hier beschriebene Haltefutter weist drei in regelmäßigem Teilungsabstand um ein Rohr angeordnete Klemmbacken auf, die in Schrägführungen geführt sind. Die von dem zu haltenden Glasrohr abgewandten Enden der Klemmbacken weisen je eine Kugelführung auf, die alle in einem Druckring geführt wird. Auf den Druckring wirkt eine Feder, so daß die Klemmbacken in den Schrägführungen in einem spitzen Winkel in Richtung auf die Längsachse des Glasrohres verschoben werden. Über einen Betätigungshebel ist der Druckring entgegen dem Federdruck zurückziehbar, wodurch auch die über die Kugelführung in dem Druckring geführten Klemmbacken von dem Glasrohr zurückgezogen werden. Dieses Haltefutter hat eine verhältnismäßig große Längenausdehnung und kann Glasrohre nur innerhalb eines bestimmten Durchmesserbereiches sicher greifen. Wenn Glasrohre aus einem anderen Durchmesserbereich in diese Haltefutter eingesetzt werden, so müssen diese umgebaut werden, d.h. es werden andere Klemmbacken und/oder eine andere Feder in das Haltefutter eingesetzt.

Hierzu ist es nötig, unterschiedliche Klemmbacken und/oder Federn bereitzuhalten, wobei außerdem noch ein Zeitaufwand bei der Umstellung hinzukommt.

Der Erfindung liegt die Aufgabe zugrunde, ein Haltefutter zur Verfügung zu stellen, das Glasrohre in einem weiten Durchmesserbereich auch ohne Umbau sicher halten kann. Auch die Abmessungen des Haltefutters sollen verhältnismäßig klein sein, damit das Haltefutter in einer Fläschchenmaschine nicht zu viel Raum benötigt.

Diese Aufgabe wird bei einer gatttungsgemäßen Einrichtung durch die kennzeichnenden Merkmale des Anspruchs 1 gelöst.

Gemäß der vorliegenden Erfindung werden die Klemmbacken nicht mehr in einer Schrägführung, sondern im wesentlichen senkrecht zur Längsachse des Rohres verschoben. Dies hat den Vorteil, daß die Klemmbacken beim Greifen nun frei von einer Längsbewegung sind und somit das Glasrohr sicher greifen können, ohne es dabei geringfügig in Längsrichtung zu verschieben. Ein weiterer Vorteil dieser Verschiebung ist, daß die Klemmbacken weniger Raum in Längsrichtung des Rohres benötigen, und daher das Haltefutter kleiner als im Stand der Technik beschrieben ausführbar ist.

Vorzugsweise hat das Haltefutter drei Klemmbacken, da hiermit ein sicheres und zentriertes Greifen eines Glasrohres möglich ist.

Vorteilhaft ist auch eine Ausführung des Haltefutters, bei dem die Druckhülse zusammen mit dem Haltefutter rotiert und entsprechend zur Übertragung der notwendigen Haltekraft auf die Klemmbacken eine umlaufende Nut als Führung für mindestens eine Führungsrolle des bezüglich der Rotation des Rohres stationäre Betätigungselementes aufweist. In einer weiteren Ausführungsform ist die umlaufende Nut durch ein oder vorzugsweise zwei Axiallager ersetzt, an dem oder denen das Betätigungselement direkt ohne Zwischenschalten einer Führungsrolle angreift und so für das Öffnen und Schließen des Haltefutters sorgt.

Von Vorteil bei dem erfindungsgemäßen Haltefutter ist auch, daß die Druckhülse und die Klemmbacken über eine Zwangsführung in einem Winkel von 30° bis 60° bezüglich der Rohrachse miteinander verbunden sind, da hierdurch mit einfachen Mitteln ein sicheres Verschieben der Klemmbacken senkrecht zur Längsachse des Glasrohres möglich ist. Es hat sich herausgestellt, daß eine Zwangsführung in einem Winkel von 45° am günstigsten und platzsparendsten ist. Vorzugsweise ist die Zwangsführung eine Kulissenführung und ein darin geführter Mitnehmer, wobei vorteilhafterweise die Kulissenführung in der Druckhülse und der Mitnehmer in jeder der Klemmbacken angeordnet ist. Eine solche Anordnung ist betriebssicher und einfach in der Herstellung.

Weiterhin ist auch eine pneumatische Verschiebung der Druckhülse günstig, da eine solche Verschiebung im Gegensatz zu einer Federkraftanstellung keine Kennlinie, die unterschiedliche Verstellkräfte bedingt, aufweist und außerdem in jeder Position kraftfrei betätigt werden kann. Dies erspart einen raumbeanspruchenden Betätigungshebel für den Druckring und eine entsprechende Steuerkurve. Außerdem kann die auf das Glasrohr wirkende Haltekraft der Klemmbacken auch während des Betriebes eingestellt werden, was bei den bisherigen Haltefuttern nicht möglich war. Rutschte bei einem Haltefutter aus dem Stand der Technik das Glasrohr in dem Futter, so mußte das ganze Karussell angehalten werden, um das Haltefutter nachzustellen. Bei der pneumatischen Betätigung gemäß der vorliegenden Erfindung kann ein solches Nachstellen auch wärend des Betriebes der Fläschchenmaschine erfolgen.

Das erfindungsgemäße Haltefutter kann auch mit anderen Betätigungsmitteln für die Klemmbacken ausgerüstet werden. So ist z.B. auch eine hydraulische Betätigung oder auch eine Betätigung über Federkraft möglich, wobei dann vorzugsweise eine einstellbare Feder verwendet wird. Als am günstigsten hat sich jedoch - wie oben beschrieben - die pneumatische Steuerung erwiesen, da hierdurch mit einfachen Mitteln ein festeres oder ein lockereres Fassen des Glasrohres möglich ist. Dies ist insbesondere in einer Fläschchenmaschine von Vorteil, da das Haltefutter das Glasrohr nahe an dessen Ende hält und das Ende einerseits den schwächsten Punkt des Glasrohres darstellt und andererseits noch dazu erhitzt wird. Bei den Haltefuttern aus dem Stand der Technik war hierbei leicht eine Zerstörung des Rohrendes durch einen zu hohen Druck möglich.

Zur Übertragung einer Rotationsbewegung weist das Haltefutter am zweckmäßigsten an seinem, den Klemmbacken gegenüberliegenden Ende, ein Kraftübertragungselement auf, das z.B. ein Kettenrad oder ein Zahnrad sein kann. In einer Fläschchenmaschine sind dann die Haltefutter alle miteinander, z.B. über eine Kette bzw. ein Getriebe, verbunden, so daß alle Haltefutter im gleichen Drehsinn und mit gleicher Geschwindigkeit rotieren.

Gemäß der vorliegenden Erfindung lassen sich Haltefutter für Glasrohre mit einem Außendurchmesser von 13-50 mm verwirklichen, wohingegen auf Grund der vorgegebenen Abmessungen einer Fläschchenmaschine, in die das Haltefutter eingesetzt wird, mit den Haltefuttern aus dem Stand der Technik ohne Umbau nur ein Spannbereich bis ca. 35 mm, oder von 30 bis ca.50 mm möglich ist. Der Spannbereich von 13-50 mm des erfindungsgemäßen Haltefutters stellt einen bevorzugten Bereich dar, da in diesem Bereich praktisch alle gebräuchlichen Glasrohre für Fläschchenmaschinen liegen. Sofern gewünscht, kann durch eine andere Dimensionierung des Haltefutters auch ein anderer Spannbereich erreicht werden.

Ein Ausführungsbeispiel der Erfindung ist in den Zeichnungen dargestellt und wird im folgenden näher beschrieben.

Es zeigen
- Fig. 1: einen Längsschnitt durch ein Haltefutter,
- Fig. 2: eine Draufsicht auf ein Haltefutter von der Klemmbackenseite her, und
- Fig. 3: einen Querschnitt durch das Haltefutter.

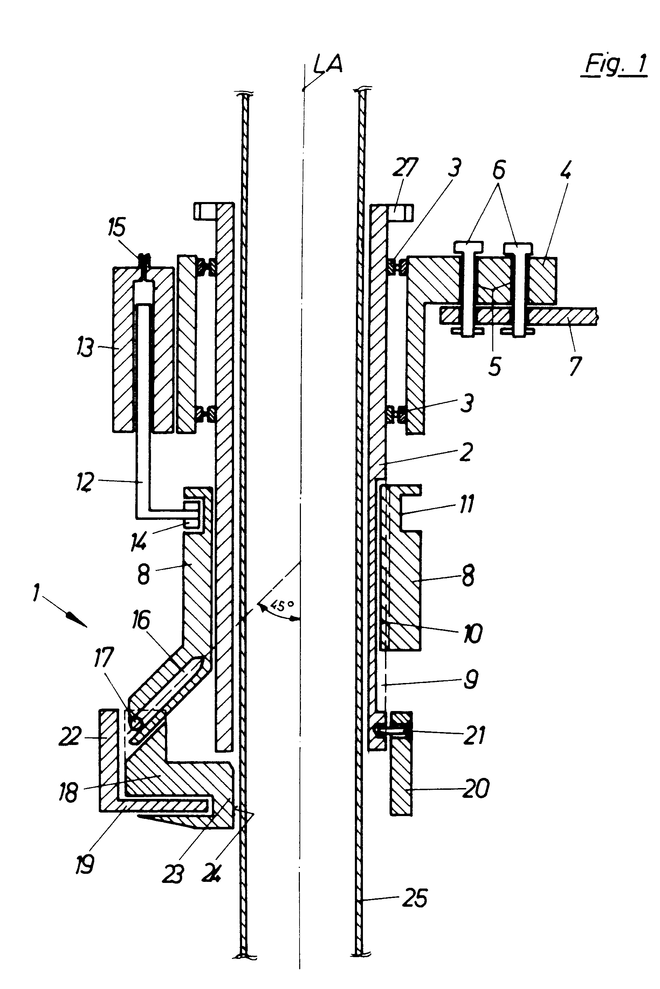

Wie in Fig. 1 dargestellt, hat das Haltefutter 1 als Basis ein Rohr 2, das in seinem oberen Bereich über Lager 3 von einer stationären Halterung 4 getragen wird, die über Bohrungen 5 mittels Befestigungselementen 6 (z.B. Schrauben) an einer Plattform 7 eines (nicht dargestellten) Karussells einer Fläschchenmaschine befestigt werden kann. Die Halterung 4 kann auch in die Plattform 7 eingeformt oder an diese auf andere Weise, z.B. durch Anschweißen, angeschossen sein. Am oberen Ende des Rohres ist außerdem ein Zahnrad 27 vorgesehen, über das das Rohr 2 relativ zur Plattform 7 drehantreibbar ist.

Außen auf dem Rohr 2 sitzt an dessen unteren Ende eine Druckhülse 8, die in Längsrichtung auf dem Rohr 2 verschiebbar ist und über einen Keil 10, der in eine Nut 9 des Rohrs 2 eingreift, mit diesem drehfest verbunden ist. Die Druckhülse 8 hat an ihrem oberen Ende eine umlaufende Führungsnut 11 für ein Betätigungselement 12, das mit seinem einen Ende in einem Pneumatikzylinder 13 sitzt und an seinem anderen Ende eine Führungsrolle 14 aufweist, die, wenn das Rohr 2 um seine Längsachse in einer Drehbewegung ist, in der Führungsnut 11 abrollt. Der Pneumatikzylinder 13 ist an der stationären Halterung 4 befestigt und weist einen Anschluß 15 auf, über den der Pneumatikzylinder 13 an ein (nicht dargestelltes) pneumatisches System zur Verschiebung des Betätigungselements 12 angeschlossen ist.

An ihrem unteren Ende weist die Druckhülse 8 drei um jeweils 120° gegeneinander versetzt angeordnete Kulissenführungen 16 (nur eine ist dargestellt) auf, die sich in einem Winkel von 45° zur Längsachse LA des Haltefutters bzw. des Rohrs 2 erstreckt. In jeder der Kulissenführungen 16 wird ein Mitnehmer 17 einer Klemmbacke 18 geführt. Die Klemmbacken 18 sitzen außerdem noch in Backenführungen 19, die im wesentlichen senkrecht zur Längsachse LA verlaufen. Hierdurch ist ein Verschieben der Klemmbacken 18 nur senkrecht zur Längsachse LA möglich.

Die Backenführungen 19 sind Teil einer Backenhalterung 20, die mit dem Rohr 2 über ein Befestigungselement 21 fest verbunden ist. Die Backenhalterung 20 weist außerdem noch einen Schild 22 auf, der die Kulissenführung 16 vor einer Verschmutzung durch z.B. Glassplitter schützt. Der Schild 22 erstreckt sich über den rückwärtigen und die seitlichen Bereiche der Klemmbacken 18.

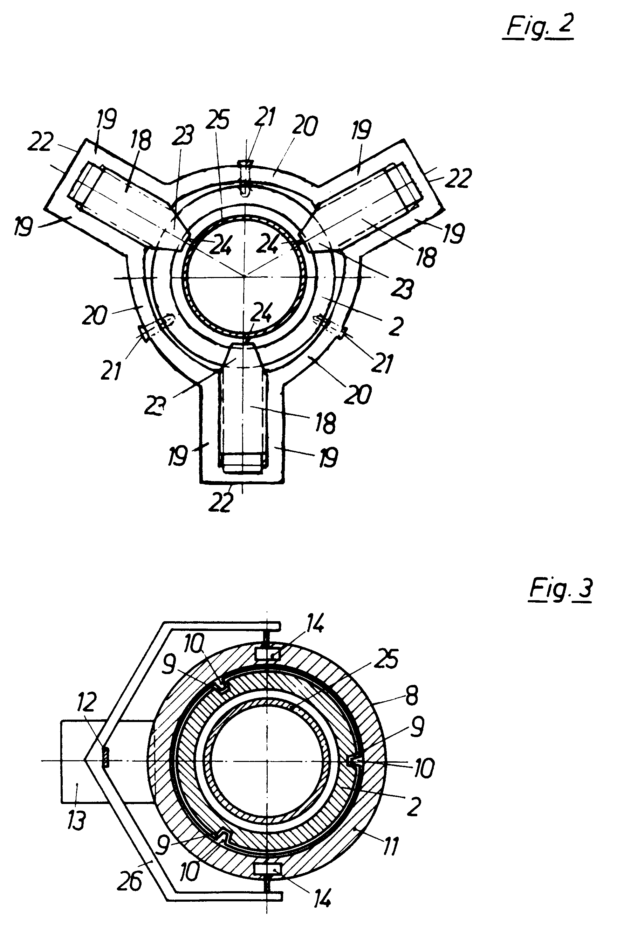

In Fig. 2 sind die Klemmbacken 18 und die Backenhalterung 20 mit den Backenführungen 19 in einer anderen Perspektive zu sehen. Die Klemmbacken 18 sind in einem Winkel von 120° zueinander um das Rohr 2 angeordnet und werden außen in jeweils zwei der Backenführungen 19 geführt. In ihrem Spannbereich 23 verjüngen sich die Klemmbacken 18 etwas, damit sie sich beim Einschieben in Richtung auf die Längsachse LA nicht behindern. Der Spannbereich 23 weist eine Stirnfläche 24 auf, die geeignet ist, ein Glasrohr 25 durch Einklemmen kraftschlüssig in dem Haltefutter 1 festzuhalten.

Deutlich ist hier auch die Backenhalterung 20 zu sehen, die im Bereich der Klemmbacken 18 in die Schilde 22 und die Backenführungen 19 übergeht.

In Fig. 3 ist eine weitere Möglichkeit zur Betätigung der Druckhülse 8 dargestellt. Anders als in Fig.1 wirkt das Betätigungselement 12 hier nicht direkt über eine Führungsrolle 14 auf die Führungsnut 9 der Druckhülse 8, sondern auf einen Bügel 26, der zwei um 180° versetzt in der Führungsnut 9 angeordnete Führungsrollen 14 trägt, wodurch ein sichereres Verschieben der Druckhülse 8 gewährleistet ist. Gut zu erkennen ist in Figur 3 auch die Anordnung der Nuten 9 in dem Rohr 2 und der Keile 10 in der Druckhülse 8.

Zum Einführen des Glasrohres 25 in des Haltefutter 1 wird dieses durch Zurückschieben der Klemmbacken 18 geöffnet. Hierzu wird aus dem Pneumatikzylinder 13 über den Anschluß 15 das Pneumatikfluid, vorzugsweise Luft, abgelassen bzw. abgepumpt, wodurch das Betätigungselement 12 in den Pneumatikzylinder 13 hineingezogen wird und über die Führungsrolle(n) 14 die Druckhülse 8 zurückzieht. Hierdurch kommt der mit der Klemmbacke 18 fest verbundene Mitnehmer 17, der vorzugsweise als Rolle ausgeführt ist, an das äußere Ende der Kulissenführung 16, da durch die Backenführungen 19 nur eine Verschiebung der Klemmbacken 18 und damit des Mitnehmers 17 nur in einer Richtung senkrecht zur Längsachse LA und nicht parallel zu dieser möglich ist.

In das so geöffnete Haltefutter 1 kann nun das Glasrohr 25, das einen beliebigen Durchmesser im Spannbereich des Haltefutters haben kann, eingeschoben werden. Dieses Einschieben des Glasrohres 12 erfolgt normalerweise vom oberen Ende des Rohrs 2 her, da die Bearbeitung des Glasrohres normalerweise an dem aus dem unteren Ende des Haltefutter herausschauenden Teiles erfolgt. Sobald das Glasrohr 25 in einer gewünschten Einschubstiefe ist, wird es zur Bearbeitung mittels der Klemmbacken 18 festgehalten. Hierzu wird über den Anschluß 15 das Pneumatikfluid wieder in den Pneumatikzylinder 13 eingebracht, so daß das Betätigungselement 12 aus diesem herausgeschoben wird. Dieses wirkt wiederum über die Führungsrolle(n) 14 auf die Druckhülse 8 und verschiebt diese nach unten in Richtung auf die Klemmbacken 18 hin. Hierbei werden diese über die Kulissenführung 16 entlang der Backenführung 19 in Richtung auf die Längsachse LA so weit verschoben, bis sie das Glasrohr 25 sicher halten. Über den Druck des Pneumatikfluids kann dabei die Haltekraft den jeweiligen Erfordernissen auch während des Betriebs der Fläschchenmaschine angepaßt werden.

Anders als dargestellt, kann eine (nicht dargestellte) Feder vorgesehen sein, die das Betätigungselement 12 bzw. die Druckhülse 8 so zurückschiebt, daß bei einem drucklosen Zustand des Pneumatikzylinders 13 die Klemmbacken 18 geöffnet sind. Hierdurch ist ein Öffnen des Haltefutters 1 nur durch Drucklosstellen des Anschluß 15 des Pneumatikzylinders 13 möglich, so daß kein Mittel zum Beaufschlagen des Pneumatikzylinders 13 mit Unterdruck notwendig ist.

Das erfindungsgemäße Haltefutter ist in jeder Lage betriebsfähig, so daß auch anders als dargestellt, die Klemmbacken 18 z.B. nach oben gerichtet sein können. Das Haltefutter kann auch so ausgebildet sein, daß das Rohr 2 einen geschlossenen Boden hat und ein Glasrohrstück von der Klemmbackenseite her in das Haltefutter eingesetzt und auch von dieser Seite wieder entnommen wird. Wird in eine solche Ausführungsform ein Glasrohrstück mit einem ebenen Rand bis zum Boden des Rohrs 2 eingesetzt, so kann über eine sich in dem Boden des Rohres befindliche Öffnung der Innenraum des Glasrohrstücks mit Überdruck beaufschlagt werden, was besonders bei der Bildung eines Fläschchenbodens von Vorteil ist.

## Patentansprüche

1. Drehbares Haltefutter (1) zum Einspannen eines Glasrohres (25), insbesondere für Maschinen zur Herstellung von Fläschchen oder Ampullen aus Glasrohren, mit einer stationären Halterung (4), in der ein Rohr (2) drehbar gelagert ist, an dessen einem Ende Klemmbacken (18) angeordnet sind, deren Abstand zur Längsachse (LA) des Rohres (2) veränderbar ist, einer außen auf dem Rohr (2) verschiebbar angeordneten Druckhülse (8), mittels der der Abstand der Klemmbacken (18) zur Längsachse (LA) des Rohres (2) veränderbar ist, wobei die Druckhülse (8) eine Führung (11) für ein stationäres Betätigungselement (12) aufweist, mittels dem die Druckhülse (8) längs des Rohres (2) verschiebbar ist, dadurch gekennzeichnet, daß an dem Rohrende Backenführungen (19) so angeordnet sind, daß die Klemmbacken (18) im wesentlichen senkrecht zur Längsachse (LA) des Rohres (2) verschiebbar sind, und daß die Klemmbacken (18) und die Druckhülse (8) eine Zwangsführung (16,17), die in einem Winkel von 30° bis 60° bzgl. der Längsachse (LA) des Rohres (2) verläuft, aufweisen.

2. Haltefutter nach Anspruch 1, dadurch gekennzeichnet, daß drei Klemmbacken (18) vorgesehen sind.

3. Haltefutter nach Anspruch 1 oder 2, dadurch gekennzeichnet, daß die Druckhülse (8) drehfest mit dem Rohr (2) verbunden ist.

4. Haltefutter nach Anspruch 3, dadurch gekennzeichnet, daß die Führung eine umlaufende Führungsnut (11) ist, in die das Betätigungselement (12) mit mindestens einer Führungsrolle (14) eingreift.

5. Haltefutter nach Anspruch 3, dadurch gekennzeichnet, daß die Führung zwei Axiallager aufweist, auf die das Betätigungselement (12) eingreift.

6. Haltefutter nach einem der vorhergehenden Ansprüche, dadurch gekennzeichnet, daß die Zwangsführung eine Kulissenführung (16) und einen darin geführten Mitnehmer (17) aufweist.

7. Haltefutter nach Anspruch 6, dadurch gekennzeichnet, daß die Kulissenführung (16) in der Druckhülse (8) und der Mitnehmer (17) an jeder der Klemmbacken (18) angeordnet ist.

8. Haltefutter nach einem der vorhergehenden Ansprüche, dadurch gekennzeichnet, daß die Kulissenführung (16) in einem Winkel von 45° bzgl. der Längsachse des Rohres (2) verläuft.

9. Haltefutter nach einem der vorhergehenden Ansprüche, dadurch gekennzeichnet, daß das Betätigungselement (12) pneumatisch verschiebbar ist.

10. Haltefutter nach einem der vorhergehenden Ansprüche, dadurch gekennzeichnet, daß das andere Ende des Rohres (2) ein Mittel (27) zur Übertragung einer Drehbewegung auf das Rohr (2) aufweist.

11. Haltefutter nach einem der vorhergehenden Ansprüche, dadurch gekennzeichnet, daß die Druckhülse (8) zwischen den Klemmbacken (18) und der Halterung (4) angeordnet ist.

## Claims

1. Rotatable holding chuck (1) for clamping a glass tube (25), in particular for machines for manufacturing phials or ampoules comprising glass tubes, having a stationary mounting (4) in which there is rotatably mounted a tube (2), at the one end of which clamping jaws (18) are arranged, the spacing thereof with respect to the longitudinal axis (LA) of the tube (2) being variable, a pressure sleeve (8) which is arranged displaceably on the outside on the tube (2) and by means of which the spacing between the clamping jaws (18) with respect to the longitudinal axis (LA) of the tube (2) is variable, the pressure sleeve (8) having a guide (11) for a stationary actuating element (12) by means of which the pressure sleeve (8) is displaceable lengthwise of the tube (2), characterized in that jaw guides (19) are arranged at the tube end such that the clamping jaws (18) are displaceable substantially perpendicular to the longitudinal axis (LA) of the tube (2), and in that the clamping jaws (18) and the pressure sleeve (8) have a forcible guide means (16, 17) which runs at an angle of 30° to 60° with respect to the longitudinal axis (LA) of the tube (2).

2. Holding chuck according to Claim 1, characterized in that three clamping jaws (18) are provided.

3. Holding chuck according to Claim 1 or 2, characterized in that the pressure sleeve (8) is connected non-rotatably to the tube (2).

4. Holding chuck according to Claim 3, characterized in that the guide is a peripheral guide groove (11) in which the actuating element (12) engages by means of at least one guide roller (14).

5. Holding chuck according to Claim 3, characterized in that the guide has two axial bearings on which the actuating element (12) engages.

6. Holding chuck according to one of the preceding claims, characterized in that the forcible guide means has a slide guide (16) and, guided therein, an entrainment means (17).

7. Holding chuck according to Claim 6, characterized in that the slide guide (16) is arranged in the pressure sleeve (8) and the entrainment means (17) is arranged on each of the clamping jaws (18).

8. Holding chuck according to one of the preceding claims, characterized in that the slide guide (16) runs at an angle of 45° with respect to the longitudinal axis of the tube (2).

9. Holding chuck according to one of the preceding claims, characterized in that the actuating element (12) is pneumatically displaceable.

10. Holding chuck according to one of the preceding claims, characterized in that the other end of the tube (2) has a means (27) for transmitting a rotary movement to the tube (2).

11. Holding chuck according to one of the preceding claims, characterized in that the clamping tube (8) is arranged between the clamping jaws (18) and the mounting (4).

## Revendications

1. Mandrin de serrage (1) rotatif pour la fixation d'un tube de verte (25), notamment pour des machines permettant de fabriquer des flacons ou des ampoules à partir de tubes de verre, comportant un support (4) stationnaire dans lequel un tube (2) est monté avec possibilité de rotation lequel tube porte à l'une de ses extrémités des mâchoires de serrage (18) dont la distance par rapport à l'axe longitudinal (LA) du tube (2) peut être modifiée, une bague de pression 8 qui est montée avec possibilité de déplacement en translation à l'extérieur sur le tube (2) et au moyen de laquelle on peut faire varier la distance entre les mâchoires de serrage (18) et l'axe longitudinal (LA) du tube (2), la douille de pression (8) présentant un guide (11) pour un organe d'actionnement (12) stationnaire au moyen duquel la douille de pression (8) peut être déplacée le long du tube (2), caractérisé par le fait que des guides de mâchoires (19) sont disposés à l'extrémité du tube de manière telle que les mâchoires de serrage (18) se déplacent sensiblement perpendiculairement à l'axe longitudinal (LA) du tube (2) et par le fait que les mâchoires de serrage (18) et la douille de pression (8) comportent un guidage forcé (16, 17) qui s'étend avec un angle compris entre 30 et 60 ° par rapport à l'axe longitudinal (LA) du tube (2).

2. Mandrin de serrage selon la revendication 1, caractérisé par le fait qu'il est prévu trois mâchoires de serrage (18).

3. Mandrin de serrage selon la revendication 1 ou la revendication 2, caractérisé par le fait que la bague de pression (8) est solidaire en rotation du tube (2).

4. Mandrin de serrage selon la revendication 3, caractérisé par le fait que le guide est une rainure de guidage (11) circulaire dans laquelle l'organe d'entraînement (12) s'engage par au moins un galet (14).

5. Mandrin de serrage selon la revendication 3, caractérisé par le fait que le guide comporte deux butées axiales sur lesquelles agit l'organe d'entraînement (12).

6. Mandrin de serrage selon l'une des revendications précédentes, caractérisé par le fait que le moyen de guidage forcé comporte un guide de coulisse (16) et un entraîneur (17) qui est guidé dans celui-ci.

7. Mandrin de serrage selon la revendication 6, caractérisé par le fait que le guide de coulisse (16) est disposé dans la bague de pression (8) et que l'entraîneur (17) est disposé sur chacune des mâchoires de serrage (18).

8. Mandrin de serrage selon l'une des revendications précédentes, caractérisé par le fait que le guide de coulisse (16) s'étend suivant un angle de 45 ° par rapport à l'axe longitudinal du tube (2).

9. Mandrin de serrage selon l'une des revendications précédentes, caractérisé par le fait que l'organe d'actionnement (12) peut être déplacé par des moyens pneumatiques.

10. Mandrin de serrage selon l'une des revendications précédentes, caractérisé par le fait que l'autre extrémité du tube (2) comporte un moyen (27) de transmission du mouvement de rotation au tube (2).

11. Mandrin de serrage selon l'une des revendications précédentes, caractérisé par le fait que la bague de pression (8) est disposée entre les mâchoires de serrage (18) et le support (4).
